# EUROPÄISCHE PATENTSCHRIFT

(11) **EP 3 636 944 B1**
(45) Veröffentlichungstag und Bekanntmachung des Hinweises auf die Patenterteilung: **28.06.2023**
(21) Anmeldenummer: 18465594.2
(22) Anmeldetag: 09.10.2018
(51) Int. Cl.: F16D 1/068, F04C 29/00

(54) **ROTOR**
ROTOR
ROTOR

(43) Veröffentlichungstag der Anmeldung: 15.04.2020
(73) Patentinhaber: Vitesco Technologies GmbH, 93055 Regensburg (DE)
(72) Erfinder: Han, Pavel-Sorin, 517340 Horea (RO); Ivanov, Serghei, 307041 Dudestii Noi (RO); Isaincu, Alexandru, 307041 Dudestii Noi (RO); Pecheanu, Doru Lucian, 905700 Navodari (RO)
(74) Vertreter: Vitesco Technologies

(56) Entgegenhaltungen:
- EP-A1- 0 602 143
- EP-A1- 1 055 823
- EP-B1- 0 602 143
- JP-A- H07 301 211

## Beschreibung

Die vorliegende Erfindung betrifft einen Rotor, insbesondere für eine Pumpe, eine Pumpe mit dem Rotor sowie ein Kraftfahrzeug mit der Pumpe und Verfahren zum Herstellen des Rotors.

Die WO 93/04811 A1 betrifft einen Rotor für eine Schraubenrotormaschine, der eine Metallwelle, die mit einer Anzahl radialer, spiralförmig verlaufender Vorsprünge versehen ist, und einen an und um die Welle angeformten Rotorkörper aus Kunststoff aufweist.

Die JP H07 301211 A betrifft eine Wellenbefestigungsvorrichtung, bei der ein Trommelteil aus unterschiedlichem Material an der Außenseite eines Schaftteils befestigt ist, wobei Nuten an der Außenseite des Schaftteils vorgesehen sind.

Die EP 1 055 823 A1 betrifft eine Fahrzeug-Flügelzellenvakuumpumpe mit einem zylindrischen Gehäuse mit einer Ansaugöffnung und einer Ausstoßöffnung, einem exzentrisch in dem Gehäuse untergebrachten Rotor, einer Welle zum Drehantrieb des Rotors und einer Schaufel, die in einem Gleitkontakt mit einer Innenumfangsfläche des Gehäuses drehbar ist, wobei die Welle an ihrem Außenumfang mit einem Vorsprung oder einer Nut versehen ist und die Welle und der Rotor einstückig aneinander befestigt sind.

Ein weiteres Beispiel für einen Rotor für eine Pumpe ist in EP 0 602 143 A1 offenbart.

Aufgabe der vorliegenden Erfindung ist es, einen Rotor, insbesondere dessen Betrieb und/oder Herstellung, zu verbessern. Diese Aufgabe wird durch einen Rotor mit den Merkmalen des Anspruchs 1 gelöst. Ansprüche 7-9 stellen eine Pumpe mit einem hier beschriebenen Rotor, ein Kraftfahrzeug mit einer solchen Pumpe sowie ein Verfahren zum Herstellen eines hier beschriebenen Rotors unter Schutz. Die Unteransprüche betreffen vorteilhafte Weiterbildungen.

Nach einer Ausführung der vorliegenden Erfindung weist ein Rotor, insbesondere ein Rotor für eine Pumpe, in einer Ausführung eine Kraftfahrzeugpumpe, bzw. ein Rotor einer Pumpe, in einer Ausführung einer Kraftfahrzeugpumpe, einen Schaft, einen ein- oder mehrteiligen Ring der an, insbesondere auf, dem Schaft angeordnet, insbesondere, in einer Ausführung stoff-, reib- und/oder formschlüssig, befestigt ist bzw. wird, und eine ein- oder mehrteilige Nabe auf, wobei der Ring eine oder mehrere ebene oder gekrümmte erste axiale Stirnflächen und eine oder mehrere hiervon in Umfangsrichtung beabstandete ebene oder gekrümmte zweite axiale Stirnflächen aufweist.

In einer Ausführung ist/sind die bzw. eine oder mehrere der ersten Stirnflächen (jeweils) in Umfangsrichtung der bzw. einer oder zwei der zweiten Stirnflächen benachbart und/oder die bzw. eine oder mehrere der zweiten Stirnflächen (jeweils) in Umfangsrichtung der bzw. einer oder zwei der ersten Stirnflächen benachbart, insbesondere also erste und zweite Stirnflächen in Umfangsrichtung alternierend angeordnet.

Unter einer Axialrichtung wird vorliegend insbesondere eine zu einer Rotationsachse des Rotors bzw. Längsachse des Schaftes parallele Richtung verstanden, unter einer Umfangsrichtung entsprechend insbesondere eine Drehrichtung um diese Rotations- bzw. Längsachse, unter einer Radialrichtung entsprechend insbesondere eine zur Axial- und Umfangsrichtung senkrechte Richtung.

Nach einer Ausführung der vorliegenden Erfindung wird bzw. ist die Nabe auf diese Stirnflächen jeweils urgeformt bzw. durch Urformen angeformt, in einer Ausführung mittels Spritzen, Gießen, oder dergleichen.

Hierdurch kann in einer Ausführung eine vorteilhafte Befestigung der Nabe an dem Ring bzw. über den Ring an dem Schaft hergestellt werden. Entsprechend kann in einer Ausführung ein Lauf- bzw. Flügelrad der Pumpe die Nabe aufweisen, insbesondere bilden.

Nach einer Ausführung der vorliegenden Erfindung sind die erste(n), in die Nabe eingeformte(n) Stirnfläche(n) und die zweite(n), in die Nabe eingeformte(n) Stirnfläche(n) in (axial) gegensinnig(offen)en axialen Vertiefungen des Rings angeordnet. Mit anderen Worten weist der Ring nach einer Ausführung der vorliegenden Erfindung eine oder mehrere erste Vertiefungen und eine oder mehrere zweite Vertiefungen auf, die zu der bzw. den ersten Vertiefung (en) (axial) gegensinnig (offen) sind, wobei in der bzw. den ersten Vertiefung(en) die erste(n) Stirnfläche(n) und in der bzw. den zweiten Vertiefung(en) die zweite(n) Stirnfläche(n) angeordnet sind.

Hierdurch kann in einer Ausführung die Befestigung der Nabe an dem Ring verbessert werden. Einer Ausführung liegt die Idee zugrunde, dass sich die Nabe bei einer, insbesondere thermisch bedingten, (axialen) Expansion zunehmend stärker gegen die (gegensinnig orientierte(n)) erste(n) und zweite(n) Stirnfläche (n) presst und so die Befestigung verbessert, insbesondere den Ring verspannt.

Nach einer Ausführung der vorliegenden Erfindung steigen erste und zweite Stirnfläche(n) nach radial außen von dem Schaft weg wenigstens bereichsweise in axialer Richtung gleichsinnig an. Nach einer Ausführung der vorliegenden Erfindung steigen erste und zweite Stirnfläche(n) nach radial außen von dem Schaft weg wenigstens bereichsweise in axialer Richtung gegensinnig an. Hierdurch kann in einer Ausführung jeweils die Befestigung der Nabe an dem Ring verbessert werden. Einer Ausführung liegt die Idee zugrunde, dass sich die Nabe bei einer, insbesondere thermisch bedingten, (radialen) Expansion zunehmend stärker gegen die geneigten erste (n) und zweite (n) Stirnfläche (n) presst und so die Befestigung verbessert.

Dabei können gleichsinnig geneigte Stirnflächen in einer Ausführung die Herstellung des Ringes verbessern, gegensinnig geneigte Stirnflächen in einer Ausführung axiale Schubkräfte ausgleichen.

In einer Ausführung sind erste und zweite axiale Stirnflächen in Umfangsrichtung alternierend angeordnet.

Hierdurch kann in einer Ausführung die Befestigung der Nabe an dem Ring (weiter) verbessert werden.

Erfindungsgemäß ist bzw. sind die erste (n) Stirnfläche (n) in Tiefenrichtung der (ersten) axialen Vertiefung (en), in der sie angeordnet, axial tiefer angeordnet als zweite(n) Stirnfläche(n). Mit anderen Worten liegen in einer Ausführung bezüglich (wenigstens) einer Schnittebene senkrecht zur Axialrichtung die axialen Eingänge bzw. Öffnungen der ersten Vertiefung (en) und die zweite(n) Stirnfläche(n) auf einer Seite dieser Ebene und die erste(n) Stirnflächen auf der gegenüberliegenden Seite dieser Ebene.

Hierdurch kann in einer Ausführung die Befestigung der Nabe an dem Ring überraschenderweise (weiter) verbessert werden.

In einer Ausführung weist der Ring zwischen der bzw. einer oder mehrerer der ersten Stirnfläche(n) und wenigstens einer dieser in Umfangsrichtung benachbarten zweiten Stirnfläche (jeweils) einen Spalt bzw. eine Lücke in Umfangsrichtung auf, der bzw. die in einer Ausführung mit Material der Nabe, insbesondere bei ihrem Urformen, ganz oder teilweise gefüllt ist bzw. wird.

Einer Ausführung liegt die Idee zugrunde, um Umfangsspalte gegeneinander versetzte Flügel des Rings in die Nabe einzuformen. Hierdurch kann in einer Ausführung die Befestigung der Nabe an dem Ring (weiter) verbessert werden.

In einer Ausführung weist der Ring zwischen der bzw. einer oder mehrerer der ersten Stirnfläche(n) und wenigstens einer dieser in Umfangsrichtung benachbarten zweiten Stirnfläche (jeweils) eine axiale Wandung auf, die in einer Ausführung die (entsprechende) erste und/oder zweite Vertiefung (mit) definiert.

Hierdurch kann in einer Ausführung die Stabilität des Ringes verbessert werden.

In einer Ausführung ist bzw. sind die erste(n) Stirnfläche(n jeweils) auf einem ersten Ringflansch angeordnet, der auf der der (jeweiligen) ersten Stirnfläche axial gegenüberliegenden Seite (jeweils) eine dritte axiale Stirnfläche aufweist, auf die die Nabe jeweils urgeformt ist bzw. wird, wobei diese erste und dritte Stirnfläche nach radial außen von dem Schaft weg wenigstens bereichsweise in axialer Richtung gleich- oder gegensinnig ansteigen.

Zusätzlich oder alternativ ist bzw. sind die zweite(n) Stirnfläche (n jeweils) auf einem zweiten Ringflansch angeordnet, der auf der der (jeweiligen) zweiten Stirnfläche axial gegenüberliegenden Seite (jeweils) eine vierte axiale Stirnfläche aufweist, auf die die Nabe jeweils urgeformt ist bzw. wird, wobei diese zweite und vierte Stirnfläche nach radial außen von dem Schaft weg wenigstens bereichsweise in axialer Richtung gleich- oder gegensinnig ansteigen.

Durch eine oder mehrere erste und dritte Stirnflächen, die jeweils gegensinnig ansteigen bzw. (einen) sich nach radial außen von dem Schaft weg axial verbreiternde(n) erste(n) Ringflansch(e), bzw. eine oder mehrere zweite und vierte Stirnflächen, die jeweils gegensinnig ansteigen bzw. (einen) sich nach radial außen von dem Schaft weg axial verbreiternde (n) zweite (n) Ringflansch(e) kann in einer Ausführung die Nabe bei einer, insbesondere thermisch bedingten, (radialen) Expansion zunehmend keilartig gegen die Stirnflächen pressen und so die Befestigung (weiter) verbessern.

Durch eine oder mehrere erste und dritte Stirnflächen, die jeweils gleichsinnig ansteigen bzw. axial abgewinkelte(n) erste (n) Ringflansch (e), bzw. eine oder mehrere zweite und vierte Stirnflächen, die jeweils gleichsinnig ansteigen bzw. axial abgewinkelte(n) zweite(n) Ringflansch(e) kann in einer Ausführung ein Gewicht des Ringes reduziert werden.

In einer Ausführung ist der Ring aus einem ersten Material, in einer Ausführung Metall, herstellt und die Nabe ist bzw. wird aus einem von dem ersten Material verschiedenen zweiten Material, in einer Ausführung Kunststoff, herstellt, insbesondere urgeformt, wobei dieses zweite Material sich in einer Ausführung wenigstens in einem Temperaturbereich, der wenigstens 10 °C beträgt und/oder zwischen 20°C und 80°C liegt, bei Erwärmung stärker ausdehnt bzw. expandiert als das erste Material.

Durch solche unterschiedlichen Materialien können Ring und Nabe vorteilhaft in Hinblick auf Gewicht und/oder Funktion optimiert werden. Bei solchen unterschiedlichen Materialien kann die Erfindung mit besonderem Vorteil eingesetzt werden, um, insbesondere thermisch bedingte, Spalte zwischen Ring und Nabe zu begrenzen bzw. reduzieren.

In einer Ausführung werden bzw. sind die erste(n) und/oder zweite(n) Vertiefungen ganz oder teilweise mit Nabenmaterial (aus) gefüllt. Hierdurch kann in einer Ausführung die Befestigung der Nabe an dem Ring (weiter) verbessert werden.

Weitere Vorteile und Merkmale ergeben sich aus den Unteransprüchen und den Ausführungsbeispielen. Hierzu zeigt, teilweise schematisiert:
- Fig. 1A:: einen Rotor nach einer Ausführung der vorliegenden Erfindung;
- Fig. 1B:: eine axiale Draufsicht auf einen Ring des Rotors;
- Fig. 1C:: eine perspektivische Ansicht des Rings;
- Fig. 2A:: eine Seitansicht eines Rings eines Rotors nach einer weiteren Ausführung der vorliegenden Erfindung;
- Fig. 2B:: eine axiale Draufsicht auf den Ring der Fig. 2A;
- Fig. 3A:: eine Seitansicht eines Rings eines Rotors nach einer weiteren Ausführung der vorliegenden Erfindung;
- Fig. 3B:: eine axiale Draufsicht auf den Ring der Fig. 3A;
- Fig. 4A:: eine Seitansicht eines Rings eines Rotors nach einer weiteren Ausführung der vorliegenden Erfindung;
- Fig. 4B:: eine axiale Draufsicht auf den Ring der Fig. 4A;
- Fig. 5A:: eine Seitansicht eines Rings eines Rotors nach einer weiteren Ausführung der vorliegenden Erfindung; und
- Fig. 5B:: eine axiale Draufsicht auf den Ring der Fig. 5A.

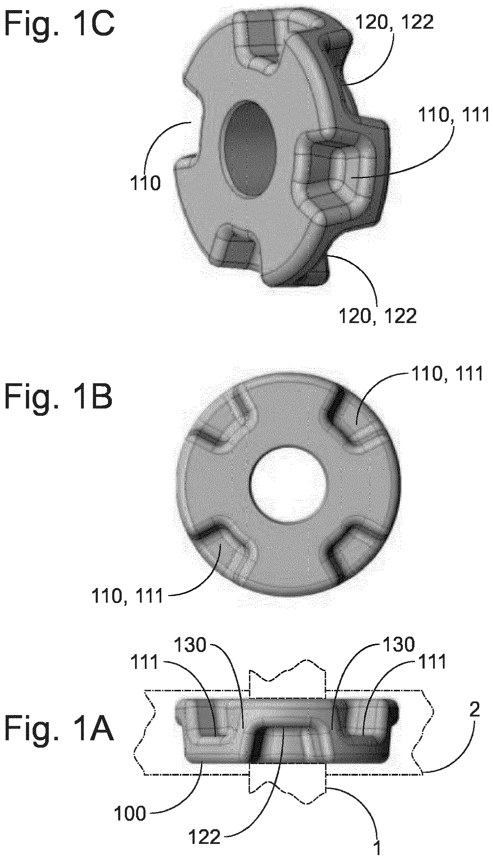

Fig. 1A zeigt einen Rotor nach einer Ausführung der vorliegenden Erfindung mit einem gestrichelt angedeuteten und in Fig. 1A nur teilweise gezeigten Schaft 1, einem auf dem Schaft 1 angeordneten, in Fig. 1B und 1C einzeln gezeigten Ring 100 und einer in Fig. 1A strichpunktiert angedeuteten und nur teilweise gezeigten Nabe 2, die durch wenigstens teilweises Umspritzen des metallischen Ringes 100 aus Kunststoff urgeformt wird bzw. ist. Der Ring 100 weist in Umfangsrichtung alternierend erste axiale Vertiefungen 110 und hierzu gegensinnig(axial offen)e zweite axiale Vertiefungen 120 auf.

Die ersten axialen Vertiefungen 110 werden jeweils durch eine erste axiale Stirnfläche 111 begrenzt, die zweiten axialen Vertiefungen 120 gegensinnig hierzu jeweils durch eine zweite axiale Stirnfläche 122, auf die die Nabe 2 beim Umspritzen urgeformt wird bzw. ist, so dass sie die Vertiefungen 110, 120 des Ringes 100 wenigstens teilweise (mit Nabenmaterial) füllt.

Erfindungsgemäß , wie insbesondere in Fig. 1A erkennbar, sind die ersten Stirnflächen 111 in Tiefenrichtung der ersten axialen Vertiefungen 110, in denen sie angeordnet sind (von oben nach unten in Fig. 1A) axial (vertikal in Fig. 1A) tiefer angeordnet ist als die zweiten Stirnflächen 122.

Zwischen jeder ersten Stirnfläche 111 und einer ihr in Umfangsrichtung (horizontal in Fig. 1A) benachbarten zweiten Stirnfläche 122 weist der Ring 100 jeweils eine axiale Wandung 130 auf, die die entsprechende erste und zweite Vertiefung 110, 120 mit definiert.

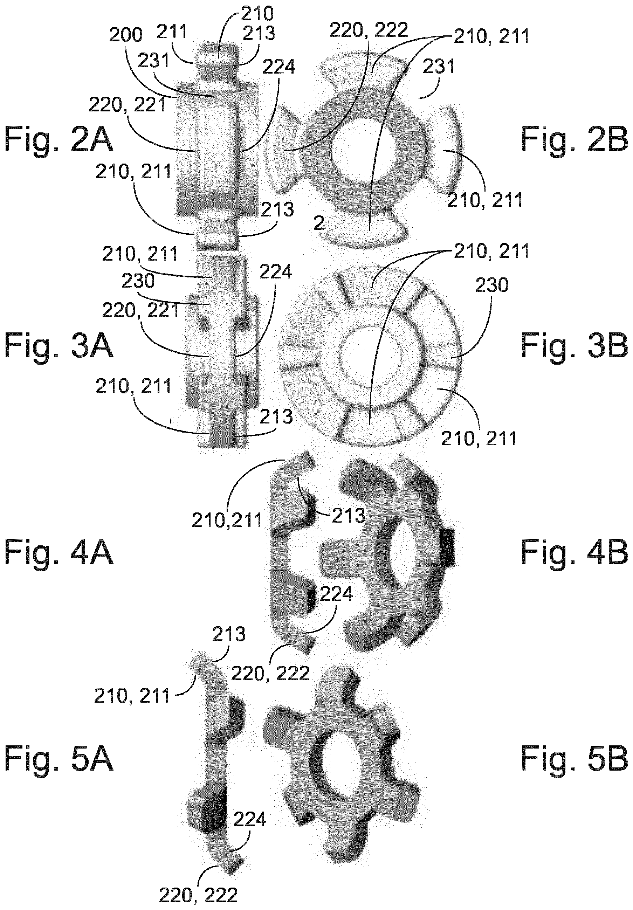

Fig. 2A, 2B zeigen in Seitansicht (Fig. 2A) bzw. axialer Draufsicht (Fig. 2B) einen Ring 200 eines im Übrigen mit der Ausführung der Fig. 1 baugleichen Rotors nach einer weiteren Ausführung der vorliegenden Erfindung, wobei einander entsprechende Merkmale durch identische Bezugszeichen identifiziert sind, so dass auf die vorstehende Beschreibung Bezug genommen und nachfolgend nur auf Unterschiede eingegangen wird. Entsprechend ist auch dieser metallische Ring auf einem Schaft (in Fig. 2 nicht dargestellt, vgl. Schaft 1 in Fig. 1A) des Rotors angeordnet und wird bzw. ist beim Urformen einer Nabe (in Fig. 2 nicht dargestellt, vgl. Nabe 3 in Fig. 1A) des Rotors wenigstens teilweise umspritzt Der Ring der Ausführung der Fig. 2 weist Ringflansche auf, die in Umfangsrichtung voneinander durch Spalte 231 getrennt sind.

Dabei bildet der in Fig. 2A, B obere und untere Ringflansch 210 jeweils einen ersten Ringflansch, dessen in Fig. 2A linke bzw. in Fig. 2B sichtbare bzw. obere Oberfläche eine erste Stirnfläche 211, und der hierzu baugleiche in Fig. 2B linke und rechte Ringflansch 220 jeweils einen zweiten Ringflansch, dessen in Fig. 2A linke bzw. in Fig. 2B sichtbare bzw. obere Oberfläche eine zweite Stirnflächen 222.

Die in Fig. 2A rechte bzw. in Fig. 2B nicht sichtbare bzw. untere Oberfläche der ersten Ringflansche 210 bildet jeweils eine dritte Stirnfläche 213, die in Fig. 2A rechte bzw. in Fig. 2B nicht sichtbare bzw. untere Oberfläche der zweiten Ringflansche 220 jeweils eine vierte Stirnfläche 224.

Die ersten und zweiten Stirnflächen 211, 222 steigen nach radial außen von dem Schaft weg in axialer Richtung gleichsinnig an (nach links in Fig. 2A).

Die dritten und vierten Stirnflächen 213, 224 steigen nach radial außen von dem Schaft weg in axialer Richtung ebenfalls gleichsinnig an (nach rechts in Fig. 2A).

Dabei steigen erste und dritte Stirnflächen 211, 213 nach radial außen von dem Schaft weg in axialer Richtung gegensinnig an, ebenso zweite und vierte Stirnflächen 222, 224, so dass eine Wandstärke der Ringflansche 210, 220 nach radial außen hin zunimmt.

Fig. 3A, 3B zeigen in Fig. 2A, 2B entsprechender Darstellung einen Ring eines im Übrigen mit der Ausführung der Fig. 2 baugleichen Rotors nach einer weiteren Ausführung der vorliegenden Erfindung, wobei einander entsprechende Merkmale durch identische Bezugszeichen identifiziert sind, so dass auf die vorstehende Beschreibung Bezug genommen und nachfolgend nur auf Unterschiede eingegangen wird.

In der Ausführung der Fig. 3A, 3B sind statt vier sechs Ringflansche 210, 220 vorhanden und diese zudem durch axiale Wandungen 230 integral miteinander verbunden.

Fig. 4A, 4B zeigen in Fig. 2A, 2B entsprechender Darstellung einen Ring eines im Übrigen mit der Ausführung der Fig. 2 baugleichen Rotors nach einer weiteren Ausführung der vorliegenden Erfindung, wobei einander entsprechende Merkmale durch identische Bezugszeichen identifiziert sind, so dass auf die vorstehende Beschreibung Bezug genommen und nachfolgend nur auf Unterschiede eingegangen wird.

In der Ausführung der Fig. 4A, 4B, die ebenfalls sechs Ringflansche aufweist, steigen die ersten und dritten Stirnflächen 211, 213 nach radial außen von dem Schaft weg in axialer Richtung gleichsinnig an (nach rechts in Fig. 4A), ebenso die zweiten und vierten Stirnflächen 222, 224, so dass die Ringflansche 210, 220 gleichsinnig geneigt sind.

Fig. 5A, 5B zeigen in Fig. 4A, 4B entsprechender Darstellung einen Ring eines im Übrigen mit der Ausführung der Fig. 4 baugleichen Rotors nach einer weiteren Ausführung der vorliegenden Erfindung, wobei einander entsprechende Merkmale durch identische Bezugszeichen identifiziert sind, so dass auf die vorstehende Beschreibung Bezug genommen und nachfolgend nur auf Unterschiede eingegangen wird.

In der Ausführung der Fig. 5A, 5B steigen die ersten und zweiten Stirnflächen 211, 222 nach radial außen von dem Schaft weg in axialer Richtung gegensinnig an, während die ersten und dritten Stirnflächen 211, 213 einerseits und die zweiten und vierten Stirnflächen 222, 224 andererseits weiterhin nach radial außen von dem Schaft weg in axialer Richtung gleichsinnig ansteigen, so dass die Ringflansche 210, 220 gegensinnig und alternierend geneigt sind.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen.

Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 1: Schaft
- 2: Nabe
- 100: Ring
- 110: erste axiale Vertiefung
- 111: erste axiale Stirnfläche
- 120: zweite axiale Vertiefung
- 122: zweite axiale Stirnfläche
- 130: axiale Wandung
- 200: Ring
- 210: erster Ringflansch
- 211: erste axiale Stirnfläche
- 213: dritte axiale Stirnfläche
- 220: zweiter Ringflansch
- 222: zweite axiale Stirnfläche
- 224: vierte axiale Stirnfläche
- 230: axiale Wandung
- 231: Spalt

## Patentansprüche

1. Rotor für eine Pumpe, mit einem Schaft (1), einem an dem Schaft angeordneten Ring (100; 200) und einer Nabe (2), wobei der Ring wenigstens eine erste axiale Stirnfläche (111; 211) und wenigstens eine hiervon in Umfangsrichtung beabstandete, zweite axiale Stirnfläche (122; 222) aufweist, auf die die Nabe jeweils urgeformt ist, wobei diese beiden in die Nabe eingeformten Stirnflächen in gegensinnigen axialen Vertiefungen angeordnet sind , **dadurch gekennzeichnet, dass** die wenigstens eine erste Stirnfläche in Tiefenrichtung der axialen Vertiefung, in der sie angeordnet ist, axial tiefer angeordnet ist als die wenigstens eine zweite Stirnfläche.

2. Rotor nach Anspruch 1, **dadurch gekennzeichnet, dass** der Ring mehrere erste axiale Stirnflächen und mehrere zweite axiale Stirnflächen aufweist, wobei diese Stirnflächen in Umfangsrichtung alternierend angeordnet sind.

3. Rotor nach einem der vorhergehenden Ansprüche, **dadurch gekennzeichnet, dass** der Ring zwischen der wenigstens einen ersten Stirnfläche und wenigstens einer in Umfangsrichtung benachbarten zweiten Stirnfläche einen Spalt (231) oder eine axiale Wandung (130; 230) aufweist.

4. Rotor nach einem der vorhergehenden Ansprüche, **dadurch gekennzeichnet, dass** die wenigstens eine erste Stirnfläche auf einem ersten Ringflansch (210) angeordnet ist, der auf der der ersten Stirnfläche axial gegenüberliegenden Seite eine dritte axiale Stirnfläche (213) aufweist, auf die die Nabe jeweils urgeformt ist, wobei die erste und dritte Stirnfläche nach radial außen von dem Schaft weg wenigstens bereichsweise in axialer Richtung gleich- oder gegensinnig ansteigen; und/oder dass die wenigstens eine zweite Stirnfläche auf einem zweiten Ringflansch (220) angeordnet ist, der auf der der zweiten Stirnfläche axial gegenüberliegenden Seite eine vierte axiale Stirnfläche (224) aufweist, auf die die Nabe urgeformt ist, wobei die zweite und vierte Stirnfläche nach radial außen von dem Schaft weg wenigstens bereichsweise in axialer Richtung gleich- oder gegensinnig ansteigen.

5. Rotor nach einem der vorhergehenden Ansprüche, **dadurch gekennzeichnet, dass** der Ring aus einem ersten Material und die Nabe aus einem von dem ersten Material verschiedenen zweiten Material herstellt ist.

6. Pumpe mit einem Rotor nach einem der vorhergehenden Ansprüche.

7. Kraftfahrzeug mit wenigstens einer Pumpe nach dem vorhergehenden Anspruch.

8. Verfahren zum Herstellen eines Rotors nach einem der Ansprüche 1 bis 5, wobei die Nabe (2) auf die wenigstens eine erste Stirnfläche (111; 211) und wenigstens eine zweite Stirnfläche (122; 222) urgeformt wird.

## Claims

1. Rotor for a pump, having a shaft (1), a ring (100; 200) arranged on the shaft, and a hub (2), wherein the ring has at least one first axial end face (111; 211) and at least one second axial end face (122; 222) spaced apart therefrom in the circumferential direction, onto which the hub is respectively cast, wherein these two end faces moulded into the hub are arranged in mutually opposite axial depressions, **characterized in that** the at least one first end face is arranged axially deeper in the depth direction of the axial depression in which it is arranged than the at least one second end face.

2. Rotor according to Claim 1, **characterized in that** the ring has a plurality of first axial end faces and a plurality of second axial end faces, wherein these end faces are arranged alternately in the circumferential direction.

3. Rotor according to one of the preceding claims, **characterized in that** the ring has a gap (231) or an axial wall (130; 230) between the at least one first end face and at least one second end face that is adjacent in the circumferential direction.

4. Rotor according to one of the preceding claims, **characterized in that** the at least one first end face is arranged on a first annular flange (210) which, on the side located axially opposite the first end face, has a third axial end face (213), onto which the hub is respectively cast, wherein the first and the third end face rise radially outwards away from the shaft in the same or opposite directions, at least in some regions in the axial direction; and/or **in that** the at least one second end face is arranged on a second annular flange (220) which, on the side located axially opposite the second end face, has a fourth axial end face (224), onto which the hub is cast, wherein the second and the fourth end face rise radially outwards away from the shaft in the same or opposite direction, at least in some regions in the axial direction.

5. Rotor according to one of the preceding claims, **characterized in that** the ring is made of a first material and the hub is made from a second material that is different from the first material.

6. Pump having a rotor according to one of the preceding claims.

7. Motor vehicle having at least one pump according to the preceding claim.

8. Method for producing a rotor according to one of Claims 1 to 5, wherein the hub (2) is cast onto the at least one first end face (111; 211) and at least one second end face (122; 222).

## Revendications

1. Rotor pour une pompe, comprenant un arbre (1), un anneau (100 ; 200) agencé sur l'arbre et un moyeu (2), l'anneau présentant au moins une première surface frontale axiale (111 ; 211) et au moins une deuxième surface frontale axiale (122 ; 222) espacée de celle-ci dans la direction circonférentielle, sur lesquelles le moyeu est respectivement formé, ces deux surfaces frontales formées dans le moyeu étant agencées dans des cavités axiales de sens opposé, **caractérisé en ce que** l'au moins une première surface frontale est agencée axialement plus profondément que l'au moins une deuxième surface frontale dans la direction de la profondeur de la cavité axiale dans laquelle elle est agencée.

2. Rotor selon la revendication 1, **caractérisé en ce que** l'anneau présente plusieurs premières surfaces frontales axiales et plusieurs deuxièmes surfaces frontales axiales, ces surfaces frontales étant agencées en alternance dans la direction circonférentielle.

3. Rotor selon l'une quelconque des revendications précédentes, **caractérisé en ce que** l'anneau présente une fente (231) ou une paroi axiale (130 ; 230) entre l'au moins une première surface frontale et l'au moins une deuxième surface frontale voisine dans la direction circonférentielle.

4. Rotor selon l'une quelconque des revendications précédentes, **caractérisé en ce que** l'au moins une première surface frontale est agencée sur une première bride annulaire (210) qui présente, sur le côté axialement opposé à la première surface frontale, une troisième surface frontale axiale (213) sur laquelle le moyeu est respectivement formé, la première et la troisième surface frontale montant radialement vers l'extérieur en s'éloignant de l'arbre, au moins par zones, dans la direction axiale, dans le même sens ou dans des sens opposés ; et/ou **en ce que** l'au moins une deuxième surface frontale est agencée sur une deuxième bride annulaire (220) qui présente, sur le côté axialement opposé à la deuxième surface frontale, une quatrième surface frontale (224) sur laquelle le moyeu est formé, la deuxième et la quatrième surface frontale montant radialement vers l'extérieur en s'éloignant de l'arbre, au moins par zones, dans la direction axiale, dans le même sens ou dans des sens opposés.

5. Rotor selon l'une quelconque des revendications précédentes, **caractérisé en ce que** l'anneau est fabriqué en un premier matériau et le moyeu en un deuxième matériau différent du premier matériau.

6. Pompe avec un rotor selon l'une quelconque des revendications précédentes.

7. Véhicule automobile avec au moins une pompe selon la revendication précédente.

8. Procédé de fabrication d'un rotor selon l'une quelconque des revendications 1 à 5, dans lequel le moyeu (2) est formé sur l'au moins une première surface frontale (111 ; 211) et l'au moins une deuxième surface frontale (122 ; 222).
